# EUROPEAN PATENT APPLICATION

(11) **EP 3 128 527 A1**
(43) Date of publication of application: **08.02.2017**
(21) Application number: 15772506.0
(22) Date of filing: 20.03.2015
(51) Int. Cl.: H01H 19/63, H01H 3/42, H01H 19/10, H01H 25/04, H01H 89/00

(54) **SWITCH DEVICE**

(30) Priority: 03.04.2014 JP 2014077073
(71) Applicant: Kabushiki Kaisha Tokai-Rika-Denki-Seisakusho, Niwa-gun, Aichi 480-0195 (JP)
(72) Inventor: KUSAMA Hiroshi, Niwa-gun Aichi 480-0195 (JP); ONO Akio, Niwa-gun Aichi 480-0195 (JP)
(74) Representative: Samson & Partner Patentanwälte mbB
(86) International application number: PCT/JP2015/058569
(87) International publication number: WO 2015/151882

(57) **Abstract**

A fog lamp knob (12) and a fog lamp rotor (16) are mounted from one direction along an axis center line (CL). When the fog lamp knob (12) and the fog lamp rotor (16) are mounted, a drive pin (24) on a fog lamp mobile member (22) is disposed between the fog lamp knob (12) cam surface (15) and the fog lamp rotor (16) cam surface (20).

## Description

### FIELD

The present invention relates to a switch device having a knob member rotationally operatable.

### RELATED ART

Switch devices having a knob member, a movable board and a fixed board are known (e.g., see Patent Documents 1 to 3). The knob member has a cylindrical shape. The knob member is configured to be rotatable about an axis. A movable contact is mounted on the movable board. When the knob member is operated and rotated, an operating force is transferred from the knob member to the movable board and thus the movable board is moved. A fixed contact is mounted on the fixed board. When the knob member is operated and rotated, the movable board is moved and thus the movable contact is brought in contact with or separated from the fixed contact.

### CITATION LIST

### PATENT DOCUMENTS

Patent Document 1: Japanese Unexamined Patent Application Publication No. 2000-67702
Patent Document 2: Japanese Unexamined Patent Application Publication No. 2004-127808
Patent Document 3: Japanese Unexamined Patent Application Publication No. H11-353980

### SUMMARY

### PROBLEMS TO BE SOLVED

In the switch devices described above, an operation piece of the movable board is inserted into a cam groove formed in the knob member. As the operation piece is guided along an inner surface of the cam groove, the movable board is operated and moved. Accordingly, when the switch devices are assembled, the operation piece of the movable board has to be inserted into the cam groove of the knob member, and thus workability is degraded.

### MEANS FOR SOLVING THE PROBLEMS

In order to solve the problems described above, a switch device includes:
a rotor member configured to be rotatable about an axis and having a first cam surface;
a knob member configured to be fitted with the rotor member and thus to be integrally rotatable with the rotor member and having a second cam surface facing the first cam surface with a gap interposed therebetween;
a movable member configured to be movable in directions along the axis and having a movable contact;
an operation piece provided on the movable member and arranged between the first cam surface and the second cam surface; and
a board having a fixed contact;
wherein the operation piece is displaced by the first cam surface and the second cam surface in accordance with rotating operation of the knob member;
wherein the movable member is moved in the directions along the axis in accordance with displacement of the operation piece, and the movable contact is brought in contact with or separated from the fixed contact

According to the this configuration, only by fitting the knob member with the rotor member, the operation piece provided on the movable member can be arranged between the first cam surface and the second cam surface facing each other. In other words, a cam groove is defined by the first cam surface and the second cam surface facing each other by fitting the knob member with the rotor member. Therefore, the cam groove, into which the operation piece is to be inserted, is not necessary to be provided on members, which are involved in rotating operation for switching. Also, a work for inserting the operation piece into the cam groove is not required. Thus, workability in assembling of the switch device is enhanced.

The switch device described above may be configured as follows:
the switch device further includes a base member supporting the fixed board; and
the rotor member and the knob member are mounted onto the base member from one of the directions along the axis.

According to this configuration, the movable component for realizing a switching operation can be efficiently mounted onto the base member. Thus, workability in assembling of the switch device is further enhanced.

### BRIEF DESCRIPTION OF DRAWINGS

Fig. 1 is a view showing an exterior appearance of a lever switch device according to one embodiment in an exploded state.
Fig. 2A is a sectional view taken along a line Xa-Xa in Fig. 1 as viewed in a direction of an arrow.
Fig. 2B is a sectional view taken along a line Xb-Xb in Fig. 1 as viewed in a direction of an arrow.

### DESCRIPTION OF EMBODIMENTS

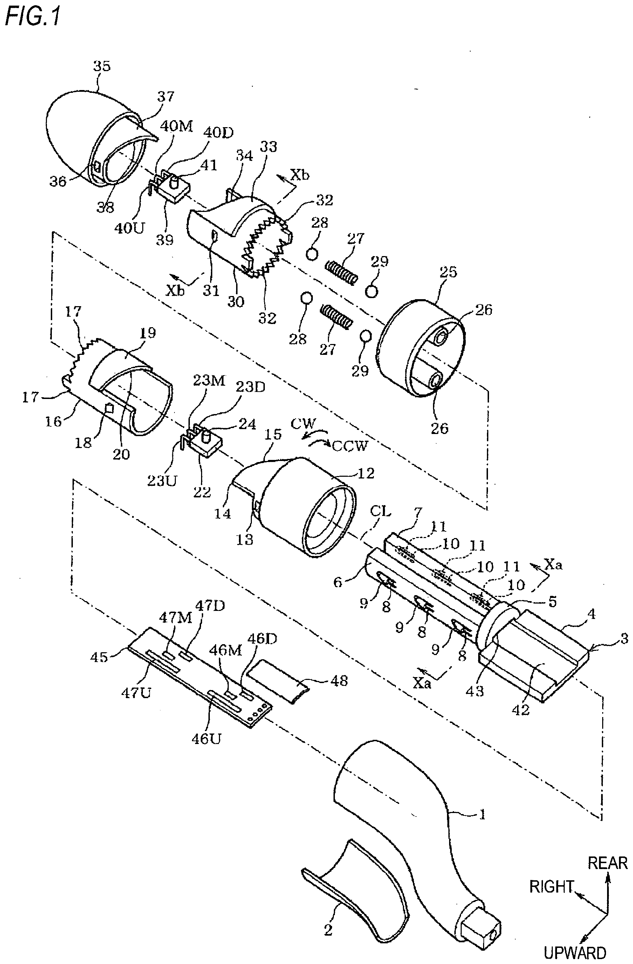

A lever switch device (one example of the switch device) of Fig. 1 is a device to be mounted on a steering column of a vehicle. The lever switch device is a device for operating a turn lamp, a head lamp, a fog lamp and the like mounted on the vehicle.

A lever 1 is mounted on the steering column to operate a turn lamp. The lever 1 is configured to be swingable between a neutral position and a left turn position. The left turn position is located above the neutral position. Also, the lever 1 is configured to be swingable between the neutral position and a right turn position. The right turn position is located below the neutral position. The lever 1 is configured to be opened to a front side thereof opposite to a driver and also opened to a right side thereof as viewed from the driver. A cover 2 is fixed to the lever 1. The cover 2 is configured to block a front face of the lever 1. Thus, a receiving chamber is defined between the lever 1 and the cover 2.

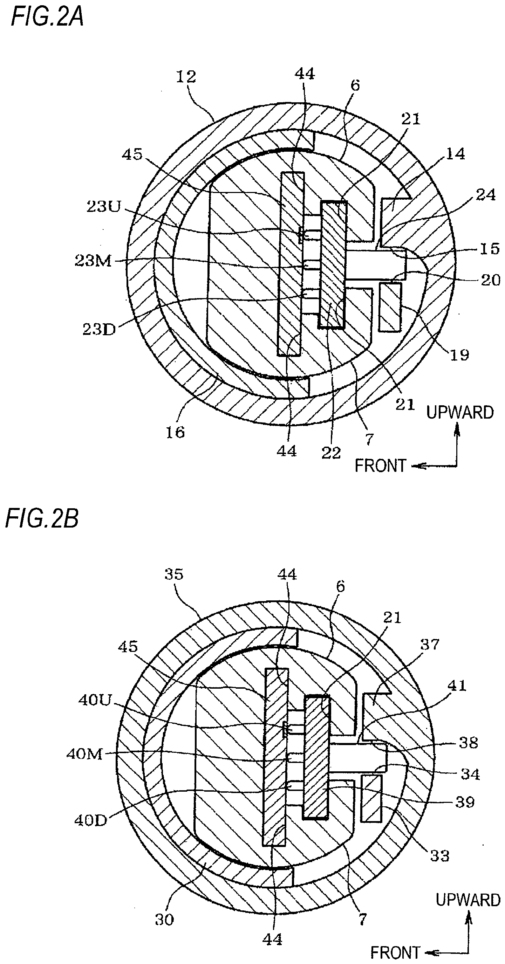

A stator 3 (one example of the base member) is molded by synthetic resin. The stator 3 has a base portion 4, a connector portion 5, an upper holder portion 6 and a lower holder portion 7. The base portion 4 has a plate shape. The base portion 4 is fixed in the receiving chamber defined between the lever 1 and the cover 2 and is covered with the lever 1 and the cover 2. The connector portion 5 has a cylindrical exterior appearance. The connector portion 5 is arranged on the right side of the base portion 4. Each of the upper holder portion 6 and the lower holder portion 7 extends in the right direction from the connector portion 5. As shown in Fig. 2, the upper holder portion 6 is configured so that an upper surface thereof has an arc-shaped cross section. The lower holder portion 7 is configured so that a lower surface thereof has an arc-shaped cross section. A front part of the upper holder portion 6 and a front part of the lower holder portion 7 are integrally formed with each other.

As shown in Fig. 1, three upper spring portions 8 are integrally molded with the upper surface of the upper holder portion 6. Each of three upper spring portions 8 has a shape of a cantilever of which a side close to the connector portion 5 is a base end. An upper claw portion 9 is integrally molded with a free end of each of three upper spring portions 8. Each of three upper spring portions 8 extends parallel to the upper holder portion 6 in an unloaded state. If an external force is exerted, then the free end of upper spring portions 8 is deformed to come close to the upper surface of the upper holder portion 6.

Similarly, three lower spring portions 10 are integrally molded with the lower surface of the lower holder portion 7. The lower spring portions 10 are arranged so as to oppose to the upper spring portions 8 via the lower holder portion 7 and the upper holder portion 6. Each of three lower spring portions 10 has a shape of a cantilever of which a side close to the connector portion 5 is a base end. A lower claw portion 11 is integrally molded with a free end of each of three lower spring portions 10. Each of three lower spring portions 10 extends parallel to the lower holder portion 7 in an unloaded state. If an external force is exerted, then the free end of the lower spring portions 10 is deformed to come close to the lower surface of the lower holder portion 7.

A fog lamp knob 12 (one example of the knob) is molded by synthetic resin. The fog lamp knob has a shape of a cylinder having a hollow portion. The fog lamp knob 12 is mounted on the stator 3 so that the upper holder portion 6 and the lower holder portion 7 are inserted through the hollow portion. An engaging hole 13 is formed in a right end portion of the fog lamp knob 12. The fog lamp knob 12 is configured to be operated with right fingers of the driver. A cam 14 is integrally molded with a right end surface of the fog lamp knob 12. The cam 14 protrudes in the right direction from the right end surface of the fog lamp knob 12. The cam 14 has an arc shape as viewed in an axial direction of the fog lamp knob 12. The cam 14 has a cam surface 15 (one example of the first cam surface). The cam surface 15 obliquely intersects with an axial center line CL of the fog lamp knob 12 as viewed in a radial direction of the fog lamp knob 12.

A fog lamp rotor 16 (one example of the rotor member) is molded by synthetic resin. The fog lamp rotor 16 has a shape of a cylinder having a hollow portion. The fog lamp knob 16 is mounted on the fog lamp knob 12 so that the upper holder portion 6 and the lower holder portion 7 are inserted through the hollow portion. The fog lamp knob 12 is fitted on an outer circumferential surface of the fog lamp rotor 16. The fog lamp knob 16 is configured to be rotatable about the common axial center line CL with the fog lamp knob 12. Two protrusions 17 are formed on a right end surface of the fog lamp rotor 16. An engaging protrusion 18 is integrally molded with the fog lamp rotor 16. When the fog lamp rotor 16 is fitted into the fog lamp knob 12, the engaging protrusion 18 is engaged with the engaging hole 13 formed in the fog lamp knob 12 from an inner circumference side of the engaging hole 13. When the fog lamp knob 12 in this state is mounted on the stator 3, one, which is located on the most left side, of three upper claw portions 9 and one, which is located on the most left side, of three lower claw portion 11 are engaged with the fog lamp rotor 16. Therefore, the fog lamp rotor 16 is prevented from being dropped out in the right direction.

As the engaging protrusion 18 of the fog lamp rotor 16 is engaged with the engaging hole 13 of the fog lamp knob 12, the fog lamp rotor 16 is connected to the fog lamp knob 12 so as not to be rotatable relative thereto. If the driver operates the fog lamp knob 12, the fog lamp knob 12 and the fog lamp rotor 16 are integrally rotated about the axial center line CL.

A cam 19 is integrally molded with the fog lamp rotor 16. The cam 19 has an arc shape as viewed in an axial direction of the fog lamp rotor 16 and has a cam surface 20 (one example of the second cam surface). The cam surface 20 obliquely intersects with the axial center line CL as viewed in a radial direction of the fog lamp rotor 16. In the state where the fog lamp rotor 16 and the fog lamp knob 12 are connected to each other, the cam surface 20 faces the cam surface 15 of the fog lamp knob 12 with a predetermined gap interposed therebetween.

As shown in Fig. 2A, a guide groove portion 21 is formed in each of the upper holder portion 6 and the lower holder portion 7 of the stator 3. The guide groove portion 21 of the upper holder portion 6 is configured to be opened to the lower side and also the right side. The guide groove portion 21 of the lower holder portion 7 is configured to be opened to the upper side and also the right side. The fog lamp movable board 22 (one example of the movable member) is inserted into the guide groove portion 21 of the upper holder portion 6 and in the guide groove portion 21 of the lower holder portion 7 from the right side. The fog lamp movable board 22 is configured to be movable along inner surfaces of two guide groove portions 21 in a direction parallel to the axial center line CL. As shown in Fig. 1, movable contacts 23U, 23M, 23D are mounted on a front surface of the fog lamp movable board 22. Each of these movable contacts 23U, 23M, 23D is a spring member and is arranged in a vertical array.

As shown in Figs. 1 and 2A, a driving pin 24 (one example of the operation piece) is fixed on the fog lamp movable board 22. In the state where the fog lamp knob 12 and the fog lamp rotor 16 are connected to each other, the driving pin 24 is inserted in the gap defined between the cam surface 15 of the fog lamp knob 12 and the cam surface 20 of the fog lamp rotor 16. If the fog lamp knob 12 together with the fog lamp rotor 16 is operated to be rotated in a CW direction, the cam surface 20 of the fog lamp rotor 16 pushes the driving pin 24 in the left direction. Therefore, the fog lamp movable board 22 is moved along the two guide groove portions 21 in the left direction. If the fog lamp knob 12 together with the fog lamp rotor 16 is operated to be rotated in a CCW direction, the cam surface 15 of the fog lamp knob 12 pushes the driving pin 24 in the right direction. Therefore, the fog lamp movable board 22 is moved along the two guide groove portions 21 in the right direction. The fog lamp movable board 22 is configured to be moveable between the right position and the left position.

The lever switch device has a fixing member 25. The fixing member 25 is molded by synthetic resin. The fixing member 25 has a shape of a cylinder having a hollow portion. In an assembled state of the lever switch device, the fixing member 25 is laterally arranged on the right side of the fog lamp knob 12 and fog lamp rotor 16, and the upper holder portion 6 and the lower holder portion 7 of the stator 3 are inserted through the hollow portion of the fixing member 25. Also, one, which is located on the middle, of three upper claw portions 9 and one, which is located on the middle, of three lower claw portions 11 are engaged with the fixing member 25. Therefore, the fixing member 25 is prevented from being dropped out in the right direction. Further, the fixing member 25 is configured to be fixed relative to the upper holder portion 6 and the lower holder portion 7 and also to be rotatable about the axial center line CL relative to the fog lamp knob 12 and the fog lamp rotor 16.

Two spring receiving portions 26 are integrally formed with an inner circumferential surface of the fixing member 25. Each of these two spring receiving portions 26 has a shape of a cylinder extending parallel to the axial center line CL. A spring 27 is inserted in each of two spring receiving portions 26. Each of two springs 27 is a compressive coil spring. A head lamp-side ball 28 is fixed on a right end portion of each of these two springs 27. A fog lamp-side ball 29 is fixed on a left end portion of each of two springs 27.

The lever switch device has a head lamp rotor 30 (one example of the rotor member). The head lamp rotor 30 is molded by synthetic resin. The head lamp rotor 30 has a shape of a cylinder having a hollow portion. An engaging protrusion 31 is integrally formed with an outer circumferential surface of the head lamp rotor 30. In the assembled state of the lever switch device, the head lamp rotor 30 is laterally arranged on the right side of the fixing member 25, and the upper holder portion 6 and the lower holder portion 7 of the stator 3 are inserted through the hollow portion of the head lamp rotor 30. Also, one, which is located on the most right side, of three upper claw portions 9 and one, which is located the most right side, of three lower claw portions 11 are engaged with the head lamp rotor 30. Therefore, the head lamp rotor 30 is prevented from being dropped out in the right direction. Further, the head lamp rotor 30 is configured to be fixed relative to the upper holder portion 6 and the lower holder portion 7 and also to be rotatable about the axial center line CL.

Two protrusions 32 are formed on a left end surface of the head lamp rotor 30. A cam 33 is integrally formed with the head lamp rotor 30. The cam 33 has an arc shape as viewed in an axial direction of the head lamp rotor 30. The cam 33 has a cam surface 34 (one example of the first cam surface) obliquely intersecting with the axial center line CL as viewed in a radial direction of the head lamp rotor 30.

The lever switch device has a head lamp knob 35 (one example of the knob member). The head lamp knob 35 is molded by synthetic resin. The head lamp knob 35 has a shape of a cylinder having a hollow portion. The head lamp knob 35 is fitted on an outer circumferential surface of the heat lamp rotor 30. In this state, a right end portion of each of the upper holder portion 6 and the lower holder portion 7 is received in the hollow portion of the head lamp rotor 30. The head lamp knob 35 is configured to be operated with right fingers of the driver. An engaging hole 36 is formed in a left end portion of the head lamp knob 35. When the head lamp knob 35 is fitted onto the head lamp rotor 30, the engaging protrusion 31 of the head lamp rotor 30 is engaged in the engaging hole 36 of the head lamp knob 35. Therefore, the head lamp knob 35 is connected to the head lamp rotor 30 so as not to be rotatable relative thereto. If the driver operates the head lamp knob 35, the head lamp knob 35 and the head lamp rotor 30 are integrally rotated above the axial center line CL.

A cam 37 is integrally molded with the head lamp knob 35. The cam 37 protrudes in the left direction from a left end surface of the head lamp knob 35. The cam 37 has an arc shape as viewed in an axial direction of the head lamp knob 35. The cam 37 has a cam surface 38 (one example of the second cam surface). The cam surface 38 obliquely intersects with the axial center line CL as viewed in a radial direction of the head lamp rotor 35. In the state where the head lamp rotor 30 and the head lamp knob 35 are connected to each other, the cam surface 38 faces the cam surface 34 of the head lamp rotor 30 with a predetermined gap interposed therebetween.

The lever switch device has a head lamp movable board 39 (one example of the movable member). As shown in Fig. 2B, the head lamp movable board 39 is inserted in the guide groove portion 21 of the upper holder portion 6 and in the guide groove portion 21 of the lower holder portion 7. In the assembled state of the lever switch device, the head lamp movable board 39 is arranged on the right side of the fog lamp movable board 22. The head lamp movable board 39 is configured to be movable along the inner surfaces of two guide groove portions 21 in a direction parallel to the axial center line CL. Movable contacts 40U, 40M, 40D are mounted on a front surface of the head lamp movable board 39. Each of these movable contacts 40U, 40M, 40D is a spring member and is arranged in a vertical array.

As shown in Figs. 1 and 2B, a driving pin 41 (one example of the operation piece) is fixed on the head lamp movable board 39. In the state where the head lamp knob 35 and the head lamp rotor 30 are connected to each other, the driving pin 41 is inserted in the gap defined between the cam surface 34 of the head lamp rotor 30 and the cam surface 38 of the head lamp knob 35. If the head lamp knob 35 together with the head lamp rotor 30 is operated to be rotated in the CW direction in Fig. 1, the cam surface 38 of the head lamp knob 35 pushes the driving pin 41 in the left direction. Therefore, the head lamp movable board 39 is moved along the two guide groove portions 21 in the left direction. If the head lamp knob 35 together with the head lamp rotor 30 is operated to be rotated in the CCW direction in Fig. 1, the cam surface 34 of the head lamp rotor 30 pushes the driving pin 41 in the right direction. Therefore, the head lamp movable board 39 is moved along the two guide groove portions 21 in the right direction. The head lamp movable board 39 is configured to be displaceable between the right position and the left position.

In the assembled state of the lever switch device, each of two fog lamp-side balls 29 is pressed against the respective protrusions 17 of the fog lamp rotor 16 by a spring force of the respective springs 27. If the driver operates and rotates the fog lamp knob 12, the two fog lamp-side balls 29 are axially displaced along edges of two protrusions 17. Therefore, a clicking feeling in rotating operation of the fog lamp knob 12 can be provided.

A plurality of stop positions is set with respect to the fog lamp knob 12. The plurality of stop positions includes a first stop position, a second stop position and a third stop position. If the fog lamp knob 12 is positioned at the first stop position, the fog lamp movable board 22 is positioned at the right position as described above. The second stop position is a position where the fog lamp knob 12 has been rotationally operated from the first stop position in the CW direction. If the fog lamp knob 12 is positioned at the second stop position, the fog lamp movable board 22 is positioned at a middle position located between the right position and the left position as described above. The third stop position is a position where the fog lamp knob 12 has been rotationally operated from the second stop position in the CW direction. If the fog lamp knob 12 is positioned at the third stop position, the fog lamp movable board 22 is positioned at the left position as described above.

In the assembled state of the lever switch device, each of two head lamp-side balls 28 is pressed against the respective protrusions 32 of the head lamp rotor 30 by a spring force of the respective springs 27. If the driver operates and rotates the head lamp knob 35, the two head lamp-side balls 28 are axially displaced along edges of two protrusions 32. Therefore, a clicking feeling in rotating operation of the head lamp knob 35 can be provided.

A plurality of stop positions is set with respect to the head lamp knob 35. The plurality of stop positions includes a first stop position, a second stop position and a third stop position. If the head lamp knob 35 is positioned at the first stop position, the head lamp movable board 39 is positioned at the right position as described above. The second stop position is a position where the head lamp knob 35 has been rotationally operated from the first stop position in the CW direction. If the head lamp knob 35 is positioned at the second stop position, the head lamp movable board 39 is positioned at a middle position located between the right position and the left position as described above. The third stop position is a position where the head lamp knob 35 has been rotationally operated from the second stop position in the CW direction. If the head lamp knob 35 is positioned at the third stop position, the head lamp movable board 39 is positioned at the left position as described above.

As shown in Fig. 1, an insertion groove portion 42 is formed in the base portion 4 of the stator 3. The insertion groove portion 42 is configured to be opened to the right side, the left side and the rear side. A right end of the insertion groove portion 42 is connected to a connection groove portion 43. The connection groove portion 43 is formed in the connector portion 5 of the stator 3 and is configured to be opened to the left side and also the right side.

As shown in Fig. 2, a fixing groove portion 44 is formed in each of the upper holder portion 6 and the lower holder portion 7 of the stator 3. The fixing groove portion 44 of the upper holder portion 6 is configured to be opened to the lower side. The fixing groove portion 44 of the upper holder portion 6 is arranged in front of the guide groove portion 21 of the upper holder portion 6. The fixing groove portion 44 of the lower holder portion 7 is configured to be opened to the upper side. The fixing groove portion 44 of the lower holder portion 7 is arranged in front of the guide groove portion 21 of the lower holder portion 7. A right end portion of each of these two fixing groove portions 44 is closed and a left end portion thereof is communicated with the connection groove portion 43 of the connector portion 5.

As shown in Fig. 1, the lever switch device has a fixed board 45 (one example of the board). As shown in Fig. 2, a part of the fixed board 45 is arranged in the fixing groove portion 44 of the upper holder portion 6 and in the fixing groove potion 44 of the lower holder portion 7. The fixed board 45 is inserted into the two fixing groove portions 44 from the left side, after passing through the insertion groove portion 42 of the base portion 4 and the connection groove portion 43 of the connector portion 5 in this order. The fixed board 45 is immovably positioned by coming in contact with right end surfaces of the two fixing groove portions 44. The fixed board 45 is arranged in front of the fog lamp movable board 22 and head lamp movable board 39 with a gap interposed therebetween. Each of upper and lower end surfaces of the fixed board 45 is in contact with a bottom surface of each fixing groove portion 44.

As shown in Fig. 1, fixed contacts 46U, 46M, 46D are mounted on a back surface of the fixed board 45. These fixed contacts 46U, 46M, 46D extend in a straight line shape to be parallel to the axial center line CL. Lengthwise dimensions of the fixed contacts 46U, 46M, 46D are different from each other. In the state where the fixed board 45 is inserted in the two fixing groove portion 44, the fixed contacts 46U, 46M, 46D are received in the fog lamp rotor 16. These fixed contacts 46U, 46M, 46D constitute a fog lamp switch, together with the movable contacts 23U, 23M, 23D of the fog lamp movable board 22. The fog lamp switch is configured so that depending on where of the first stop position, second stop position and third stop position the fog lamp knob 12 is stopped, an electrical state thereof is changed as fallows.

If the fog lamp knob 12 is positioned at the first stop position, the fog lamp movable board 22 is positioned at the right position. At this time, the movable contact 23U comes in contact with the fixed contact 46U, the movable contact 23M is separated from the fixed contact 46M, and the movable contact 23D is separated from the fixed contact 46D. Therefore, the fixed contacts 46U, 46M, 46D are electrically insulated from each other.

If the fog lamp knob 12 is positioned at the second stop position, the fog lamp movable board 22 is positioned at the middle position. At this time, the movable contact 23U comes in contact with the fixed contact 46U, the movable contact 23M comes in contact with the fixed contact 46M, and the movable contact 23D is separated from the fixed contact 46D. Therefore, the fixed contacts 46U, 46M are electrically connected to each other via the movable contacts 23U, 23M.

If the fog lamp knob 12 is positioned at the third stop position, the fog lamp movable board 22 is positioned at the left position. At this time, the movable contact 23U comes in contact with the fixed contact 46U, the movable contact 23M is separated from the fixed contact 46M, and the movable contact 23D comes in contact with the fixed contact 46D. Therefore, the fixed contacts 46U, 46D are electrically connected to each other via the movable contacts 23U, 23D.

As shown in Fig. 1, fixed contacts 47U, 47M, 47D are mounted on the back surface of the fixed board 45. These fixed contacts 47U, 47M, 47D extend in a straight line shape to be parallel to the axial center line CL. Lengthwise dimensions of the fixed contacts 47U, 47M, 47D are different from each other. In the state where the fixed board 45 is inserted in the two fixing groove portion 44, the fixed contacts 47U, 47M, 47D are received in the head lamp rotor 30. These fixed contacts 47U, 47M, 47D constitute a head lamp switch, together with the movable contacts 40U, 40M, 40D of the head lamp movable board 39. The head lamp switch is configured so that depending on where of the first stop position, second stop position and third stop position the head lamp knob 35 is stopped, an electrical state thereof is changed as fallows.

If the head lamp knob 35 is positioned at the first stop position, the head lamp movable board 39 is positioned at the right position. At this time, the movable contact 40U comes in contact with the fixed contact 47U, the movable contact 40M is separated from the fixed contact 47M, and the movable contact 40D is separated from the fixed contact 47D. Therefore, the fixed contacts 47U, 47M, 47D are electrically insulated from each other.

If the head lamp knob 35 is positioned at the second stop position, the head lamp movable board 39 is positioned at the middle position. At this time, the movable contact 40U comes in contact with the fixed contact 47U, the movable contact 40M comes in contact with the fixed contact 47M, and the movable contact 40D is separated from the fixed contact 47D. Therefore, the fixed contacts 47U, 47M are electrically communicated with each other via the movable contacts 40U, 40M.

If the head lamp knob 35 is positioned at the third stop position, the head lamp movable board 39 is positioned at the left position. At this time, the movable contact 40U comes in contact with the fixed contact 47U, the movable contact 40M is separated from the fixed contact 47M, and the movable contact 40D comes in contact with the fixed contact 47D. Therefore, the fixed contacts 47U, 47D are electrically communicated with each other via the movable contacts 40U, 40D.

As shown in Fig. 1, the lever switch device has a wire cable 48. A right end portion of the wire cable 48 is connected to the fixed board 45. In the assembled state of the lever switch device, the wire cable 48 is received in the connection groove portion 43 of the connector portion 5 and in the insertion groove portion 42 of the base portion 4. An ECU mounted in the vehicle detects an electrical state of the fog lamp switch via the wire cable 48 and controls the fog lamp in accordance with the detected result. Also, the ECU detects an electrical state of the head lamp switch via the wire cable 48 and controls the head lamp in accordance with the detected result.

The lever switch device is assembled in accordance with sequences (1) to (9). First, the fog lamp knob 12, the fog lamp movable board 22, the fog lamp rotor 16, the fixing member 25, the head lamp rotor 30, the head lamp movable board 39 and the head lamp knob 35 are mounted onto the stator 3 from the right side of this order. Then, the fixed board 45 is mounted onto the stator 3 from the left side.
(1) The fog lamp knob 12 is mounted onto the stator 3 from the right side. The upper holder portion 6 and the lower holder portion 7 are inserted through the hollow portion of the fog lamp knob 12.
(2) The fog lamp movable board 22 is inserted into the guide groove portion 21 of the upper holder portion 6 and into the guide groove portion 21 of the lower holder portion 7 from the right side.
(3) The fog lamp rotor 16 is mounted onto the fog lamp knob 12 from the right side. At this time, the outer circumferential surface of the fog lamp rotor 16 is fitted in an inner circumferential surface of the fog lamp knob 12, and the engaging protrusion 18 of the fog lamp rotor 16 is engaged in the engaging hole 13 of the fog lamp knob 12. Therefore, the fog lamp rotor 16 is connected to the fog lamp knob 12 so as not to be rotatable relative to the fog lamp knob 12. Also, the driving pin 24 of the fog lamp movable board 22 is arranged between the cam surface 15 of the fog lamp knob 12 and the cam surface 20 of the fog lamp rotor 16. Further, the upper holder portion 6 and the lower holder portion 7 are inserted through the hollow portion of the fog lamp rotor 16. At this time, one, which is located on the left side, of three upper claw portions 9 provided on the upper holder portion 6 and one, which is located on the left side, of three lower claw portion 11 provided on the lower holder portion 7 are engaged with the fog lamp rotor 16. Therefore, the fog lamp rotor 16 is prevented from being dropped out of the fog lamp knob 12.
(4) When the fixing member 25 is mounted from the right side, the upper holder portion 6 and the lower holder portion 7 are inserted through the hollow portion of the fixing member 25. At this time, one, which is located on the middle, of three upper claw portions 9 provided on the upper holder portion 6 and one, which is located on the middle, of three lower claw portion 11 provided on the lower holder portion 7 are engaged with the fixing member 25. Therefore, the fixing member 25 is prevented from being dropped out. The springs 27 are respectively received in the two spring receiving portions 26 provided on the fixing member 25. Each spring 27 has the head lamp-side ball 28 and the fog lamp-side ball 29 fixed thereon. When the fixing member 25 is mounted, the two fog lamp-side balls 29 come respectively in contact with the two protrusions 17 of the fog lamp rotor 16.
(5) When the head lamp rotor 30 is mounted from the right side, the upper holder portion 6 and the lower holder portion 7 are inserted through the hollow portion of the head lamp rotor 30. At this time, one, which is located on the right side, of three upper claw portions 9 provided on the upper holder portion 6 and one, which is located on the right side, of three lower claw portion 11 provided on the lower holder portion 7 are engaged with the head lamp rotor 30. Therefore, the head lamp rotor 30 is prevented from being dropped out. Also, the two head lamp-side balls 28 come respectively in contact with the two protrusions 32 of the head lamp rotor 30.
(6) The head lamp movable board 39 is inserted into the guide groove portion 21 of the upper holder portion 6 and into the guide groove portion 21 of the lower holder portion 7 from the right side.
(7) The head lamp knob 35 is mounted onto the head lamp rotor 30 from the right side. At this time, an inner circumferential surface of the head lamp knob 35 is fitted onto the outer circumferential surface of the head lamp rotor 30, and the engaging protrusion 31 of the head lamp rotor 30 is engaged in the engaging hole 36 of the head lamp knob 35. Therefore, the head lamp knob 35 is connected to the head lamp rotor 30 so as not to be rotatable relative to the head lamp rotor 30. Also, the driving pin 41 of the head lamp movable board 39 is arranged between the cam surface 34 of the head lamp rotor 30 and the cam surface 38 of the head lamp knob 35.
(8) The fixed board 45 is mounted on the stator 3. The fixed board 45 is inserted into the insertion groove portion 42 of the base portion 4 from the left side. The fixed board 45 passes through the connection groove portion 43 of the connector portion 5. Therefore, the upper end portion of the fixed board 45 is arranged in the fixing groove portion 44 of the upper holder portion 6. The lower end portion of the fixed board 45 is arranged in the fixing groove portion 44 of the lower holder portion 7. At this time, the wire cable 48 connected to the fixed board 45 is received in the connection groove portion 43 and in the insertion groove portion 42.
(9) The base portion 4 is covered with the lever 1 and the cover 2.

According to the configuration of the present embodiment, when the outer circumferential surface of the fog lamp rotor 16 is fitted into the inner circumferential surface of the fog lamp knob 12, the driving pin 24 provided on the fog lamp movable board 22 is arranged between the cam surface 15 of the fog lamp knob 12 and the cam surface 20 of the fog lamp rotor 16. In other words, a cam groove is defined by the cam surface 15 and the cam surface 20 facing each other by fitting the fog lamp rotor 16 with the fog lamp knob 12. Therefore, the cam groove, into which the driving pin 24 is to be inserted, is not necessary to be provided on the fog lamp rotor 16 or the fog lamp knob 12 which are involved in rotating operation for switching. Also, a work for inserting the operation piece into the cam groove is not required. Thus, workability in assembling of the lever switch device is enhanced.

According to the configuration of the present embodiment, when the inner circumferential surface of the head lamp knob 35 is fitted onto the outer circumferential surface of the head lamp rotor 30, the driving pin 41 provided on the head lamp movable board 39 is arranged between the cam surface 34 of the head lamp rotor 30 and the cam surface 38 of the head lamp knob 35. In other words, a cam groove is defined by the cam surface 34 and the cam surface 38 facing each other by fitting the head lamp rotor 30 with the head lamp knob 35. Therefore, the cam groove, into which the driving pin 41 is to be inserted, is not necessary to be provided on the head lamp rotor 30 or the head lamp knob 35, which are involved in rotating operation for switching. Also, a work for inserting the operation piece into the cam groove is not required. Thus, workability in assembling of the lever switch device is enhanced.

In the present embodiment, the lever switch device has the stator 3. The stator 3 supports the fixed board 45. The fog lamp rotor 16, the fog lamp movable board 22 and the fog lamp knob 12 are mounted on the stator 3 from one direction along the axial center line CL. Also, the head lamp rotor 30, the head lamp movable board 39 and the head lamp knob 35 are mounted on the stator 3 from the one direction along the axial center line CL. The fixed board 45 is mounted on the stator 3 from the other direction along the axial center line CL.

According to this configuration, when a movable component for realizing a switching operation is mounted on the stator 3, a reversal of a mounting direction, which involves a reduction of efficiency, is not required. Thus, workability in assembling of the lever switch device is further enhanced. Also, mounting is easily realized by a robot or the like, thereby reducing a mounting cost. Further, any of a straight shape and a bent shape can be employed as shapes for the lever 1 and the cover 2, and accordingly it is possible to flexibly cope with needs for design.

In the present embodiment, the fixed board 45 is arranged between the upper holder portion 6 and the lower holder portion 7 of the stator 3. Thus, one of the upper holder portion 6 and the lower holder portion 7 is prevented from being bent to come close to the other by the fixed board 45. Accordingly, when the upper claw portions 9 and the lower claw portions 11 are disengaged, movable members (fog lamp knob 12, fog lamp rotor 16, fog lamp movable board 22, fixing member 25, head lamp rotor 30, head lamp knob 35 and head lamp movable board 39) are prevented from being dropped out from the upper holder portion 6 and the lower holder portion 7.

In the present embodiment, the movable members (fog lamp knob 12, fog lamp rotor 16, fog lamp movable board 22, fixing member 25, head lamp rotor 30, head lamp knob 35 and head lamp movable board 39) are mounted on the upper holder portion 6 and the lower holder portion 7 before the fixed board 45 is arranged between the upper holder portion 6 and the lower holder portion 7. Thus, when the movable members are mounted on the upper holder portion 6 and the lower holder portion 7, one of the upper holder portion 6 and the lower holder portion 7 is allowed to be bent to come close to the other. Accordingly, works for mounting the movable members are smoothly performed.

In the present embodiment, the fog lamp knob 12, the fog lamp rotor 16 and the fog lamp movable board 22 are mounted from the one direction. Also, the head lamp rotor 30, the head lamp knob 35 and the head lamp movable board 39 are mounted from the one direction. The fixed board 45 is shared between the fog lamp movable board 22 and the head lamp movable board 39. According to this configuration, wire connection points are integrated at one site on the fixed board 45, thereby reducing the number of works for wire connection (mounting man-hours). Further, it not necessary to connect a wire to a fixed board dedicated for the head lamp movable board 39 through components involved in switching of the fog lamp, thereby further reducing working man-hours.

The foregoing embodiments are described only by way of example to facilitate understanding of the present invention. Configurations according to the foregoing embodiments may be appropriately changed or modified without departing from the spirit and scope of the invention. Also, it will be apparent that equivalents thereof are encompassed by the technical scope of the invention.

For example, the lever switch device described above may be configured so that one of a combination of the fog lamp knob 12, fog lamp rotor 16 and fog lamp movable board 22 and a combination of the head lamp rotor 30, head lamp knob 35 and head lamp movable board 39 is not provided.

For example, the lever switch device described above may be configured so that a separate fixed board is provided for each of the fog lamp movable board 22 and the head lamp movable board 39.

In the foregoing embodiments, the wire cable 48 as a separate body is connected to the fixed board 45. However, so long as positions of the fixed contacts 46U, 46M, 46D, 47U, 47M, 47D are fixed, the fixed board 45 and the wire cable 48 may be integrally constructed, for example, as a flexible circuit board.

In the foregoing embodiments, the fog lamp movable board 22 is inserted into the guide groove 21 of the upper holder portion 6 and into the guide groove portion 21 of the lower holder portion 7 from the right side. However, the fog lamp movable board 22 may be inserted into the guide groove portions 21 from the rear side. In this case, a window portion is formed between the upper holder portion 6 and the lower holder portion 7. The window portion is configured to be communicated with the guide groove portions 21 while opening to the rear side and also to have a size allowing the fog lamp movable board 22 to move forward. The fog lamp movable board 22 is slid in the left direction along the guide groove portions 21 after passing through the window portion and then reaching the guide groove portions 21, and thus is positioned at a predetermined position.

In the foregoing embodiments, the head lamp movable board 39 is inserted into the guide groove 21 of the upper holder portion 6 and into the guide groove portion 21 of the lower holder portion 7 from the right side. However, the head lamp movable board 39 may be inserted into the guide groove portions 21 from the rear side. In this case, a window portion is formed between the upper holder portion 6 and the lower holder portion 7. The window portion is configured to be communicated with the guide groove portions 21 while opening to the rear side and also to have a size allowing the head lamp movable board 39 to move forward. The head lamp movable board 39 is slid in the left direction along the guide groove portions 21 after passing through the window portion and then reaching the guide groove portions 21, and thus is positioned at a predetermined position.

Configurations illustrated and described in the foregoing embodiments may be applied to switch devices different from a lever switch device of a vehicle.

The present application is based on Japanese Patent Application No. 2014-077073 filed on April 3, 2014, the contents of which are incorporated herein by reference.

## Claims

1. A switch device comprising:
a rotor member configured to be rotatable about an axis and having a first cam surface;
a knob member configured to be fitted with the rotor member and thus to be integrally rotatable with the rotor member and having a second cam surface facing the first cam surface with a gap interposed therebetween;
a movable member configured to be movable in directions along the axis and having a movable contact;
an operation piece provided on the movable member and arranged between the first cam surface and the second cam surface; and
a board having a fixed contact;
wherein the operation piece is displaced by the first cam surface and the second cam surface in accordance with rotating operation of the knob member; and
wherein the movable member is moved in the directions along the axis in accordance with displacement of the operation piece, and the movable contact is brought in contact with or separated from the fixed contact.

2. The switch device according to claim 1 further comprising a base member supporting the fixed board,
wherein the rotor member and the knob member are mounted onto the base member from one of the directions along the axis.

## Amended claims

### Amended claims under Art. 19.1 PCT

**1.** A switch device comprising:
a rotor member configured to be rotatable about an axis and having a first cam surface;
a knob member configured to be fitted with the rotor member and thus to be integrally rotatable with the rotor member and having a second cam surface facing the first cam surface with a gap interposed therebetween;
a movable member configured to be movable in directions along the axis and having a movable contact;
an operation piece provided on the movable member and arranged between the first cam surface and the second cam surface;
a board having a fixed contact; and
a base member supporting the board,
wherein the operation piece is displaced by the first cam surface and the second cam surface in accordance with rotating operation of the knob member;
wherein the movable member is moved in the directions along the axis in accordance with displacement of the operation piece, and the movable contact is brought in contact with or separated from the fixed contact, and
wherein the rotor member and the knob member are mounted onto the base member from one of the directions along the axis.
